# EUROPEAN PATENT APPLICATION

(11) **EP 4 741 456 A1**
(43) Date of publication of application: **13.05.2026**
(21) Application number: 24835995.2
(22) Date of filing: 28.06.2024
(51) Int. Cl.: C08L 27/06, B29C 41/18, B29C 41/36, B32B 5/18, B32B 27/30, B32B 27/40

(54) **VINYL CHLORIDE RESIN COMPOSITION, METHOD FOR PRODUCING VINYL CHLORIDE RESIN COMPOSITION, VINYL CHLORIDE RESIN MOLDED ARTICLE, AND LAYERED BODY**

(30) Priority: 05.07.2023 JP 2023110905
(71) Applicant: Zeon Corporation, Tokyo 100-8246 (JP)
(72) Inventor: NISHIMURA Shota, Tokyo 100-8246 (JP)
(74) Representative: Maiwald GmbH
(86) International application number: PCT/JP2024/023629
(87) International publication number: WO 2025/009482

(57) **Abstract**

Provided are a vinyl chloride resin composition that can inhibit reduction of powder fluidity even when containing a finely ground product of surface skin material made of vinyl chloride resin and a method of producing this vinyl chloride resin composition. The vinyl chloride resin composition contains (a) vinyl chloride resin particles, (b) vinyl chloride resin fine particles A, (c) a plasticizer, and (d) a powder composition containing a powder of surface skin material made of vinyl chloride resin.

## Description

### TECHNICAL FIELD

The present disclosure relates to a vinyl chloride resin composition, a method of producing a vinyl chloride resin composition, a vinyl chloride resin molded product, and a laminate.

### BACKGROUND

Vinyl chloride resins are used in a variety of applications due to generally having excellent characteristics in terms of cold resistance, heat resistance, oil resistance, and so forth.

Specifically, automobile interior materials such as a surface skin formed of a vinyl chloride resin molded product and a laminate obtained by lining a surface skin formed of a vinyl chloride resin molded product with a foamed product such as foamed polyurethane are used in the formation of automobile interior components such as automobile instrument panels and door trims.

A vinyl chloride resin molded product that constitutes a surface skin of an automobile interior component such as an automobile instrument panel (hereinafter, such a vinyl chloride resin molded product is also referred to as "surface skin material made of vinyl chloride resin") is produced by, for example, molding a vinyl chloride resin composition containing a vinyl chloride resin, a plasticizer, and additives such as a pigment by a known molding method such as powder slush molding.

In recent years, it has become desirable to recycle waste of surface skin material made of vinyl chloride resin from viewpoints such as effective use of resources and environmental preservation, and various methods of recycling surface skin material made of vinyl chloride resin have been studied. As one example, Patent Literature (PTL) 1 discloses a method of recycling surface skin material made of vinyl chloride-based resin in which a powder obtained through grinding of used surface skin material made of vinyl chloride-based resin is used as a raw material of a second layer in a method of producing a two-layered molded article by double slush molding in which powder slush molding constituting a first step and powder slush molding constituting a second step are performed consecutively.

### CITATION LIST

### Patent Literature

PTL 1: JP-H07-052175A

### SUMMARY

### (Technical Problem)

Surface skin material made of vinyl chloride resin that is to be used in an automobile interior component or the like is typically adjusted to the shape of the automobile interior component through cutting or the like, thereby resulting in the formation of cutting remnants such as burrs and edges. In recent years, there has been demand for not only reusing waste of used surface skin material made of vinyl chloride resin, but also for reusing cutting remnants arising during processing of surface skin material made of vinyl chloride resin from viewpoints such as even more effective use of resources and environmental preservation. In view thereof, the inventors studied the reuse of waste such as used surface skin material made of vinyl chloride resin and cutting remnants of surface skin material made of vinyl chloride resin by grinding the waste to obtain a finely ground product and then mixing the finely ground product into a raw material vinyl chloride resin composition (hereinafter, also referred to as "virgin material") containing vinyl chloride resin particles, a plasticizer, and so forth.

However, the mixing of a finely ground product of waste of surface skin material made of vinyl chloride resin into virgin material resulted in a problem that the resultant vinyl chloride resin composition had poorer powder fluidity and could not be molded well.

Accordingly, one object of the present disclosure is to provide a vinyl chloride resin composition that can inhibit reduction of powder fluidity even when containing a finely ground product of surface skin material made of vinyl chloride resin and a method of producing this vinyl chloride resin composition.

Another object of the present disclosure is to provide a vinyl chloride resin molded product obtained through molding of this vinyl chloride resin composition.

Yet another object of the present disclosure is to provide a laminate including this vinyl chloride resin molded product.

### (Solution to Problem)

The inventor conducted diligent investigation with the aim of solving the problem set forth above. The inventor made a new discovery that when producing a vinyl chloride resin composition through mixing of a vinyl chloride resin and a plasticizer with a finely ground product of surface skin material made of vinyl chloride resin, powder fluidity of the obtained vinyl chloride resin composition can be improved by adding vinyl chloride resin fine particles as a dusting agent (powder fluidity modifier), and, in this manner, the inventor completed the present disclosure.

Specifically, with the aim of advantageously solving the problem set forth above, [1] a presently disclosed vinyl chloride resin composition comprises: (a) vinyl chloride resin particles; (b) vinyl chloride resin fine particles A; (c) a plasticizer; and (d) a powder composition containing a powder of surface skin material made of vinyl chloride resin. A vinyl chloride resin composition that contains vinyl chloride resin fine particles A in this manner can inhibit reduction of powder fluidity even in a situation in which the vinyl chloride resin composition contains a powder of surface skin material made of vinyl chloride resin.

Note that the "volume-average particle diameter" of vinyl chloride resin particles and vinyl chloride resin fine particles referred to in the present disclosure can be measured in accordance with JIS Z8825 by laser diffraction.

[2] In the vinyl chloride resin composition according to the foregoing [1], an amount of the powder of surface skin material made of vinyl chloride resin is preferably not less than 1 part by mass and not more than 40 parts by mass per 100 parts by mass of the vinyl chloride resin composition. When the amount of the powder of surface skin material made of vinyl chloride resin per 100 parts by mass of the vinyl chloride resin composition is not less than the lower limit set forth above in this manner, waste of surface skin material made of vinyl chloride resin can be efficiently recycled, environmental impact can be reduced, and tensile elongation evaluated at low temperature (hereinafter, also referred to as "low-temperature tensile elongation") for a vinyl chloride resin molded product produced using the obtained vinyl chloride resin composition can be improved. Moreover, when the amount of the powder of surface skin material made of vinyl chloride resin per 100 parts by mass of the vinyl chloride resin composition is not more than the upper limit set forth above, powder fluidity of the vinyl chloride resin composition can be even further improved.

[3] In the vinyl chloride resin composition according to the foregoing [1] or [2], the (d) powder of surface skin material made of vinyl chloride resin preferably has a volume-average particle diameter of not less than 50 µm and not more than 500 µm. When the volume-average particle diameter of the powder of surface skin material made of vinyl chloride resin is within the specific range set forth above, powder fluidity of the vinyl chloride resin composition can be even further improved.

Note that the "volume-average particle diameter" of a powder of surface skin material made of vinyl chloride resin referred to in the present disclosure can be measured in accordance with JIS Z8825 by laser diffraction.

[4] In the vinyl chloride resin composition according to any one of the foregoing [1] to [3], the powder composition preferably further contains (b-1) vinyl chloride resin fine particles B. When the powder composition that contains the powder of surface skin material made of vinyl chloride resin further contains vinyl chloride resin fine particles B in this manner, powder fluidity of the obtained vinyl chloride resin composition can be even further improved.

[5] In the vinyl chloride resin composition according to any one of the foregoing [1] to [4], an amount of all vinyl chloride resin fine particles is preferably not less than 3 parts by mass and not more than 40 parts by mass per 100 parts by mass of the powder of surface skin material made of vinyl chloride resin. When the amount of all vinyl chloride resin fine particles per 100 parts by mass of the powder of surface skin material made of vinyl chloride resin is not less than the lower limit set forth above, powder fluidity of the obtained vinyl chloride resin composition can be even further improved. Moreover, when the amount of all vinyl chloride resin fine particles per 100 parts by mass of the powder of surface skin material made of vinyl chloride resin is not more than the upper limit set forth above, reduction of strength of an obtained vinyl chloride resin molded product can be inhibited.

[6] In the vinyl chloride resin composition according to any one of the foregoing [1] to [5], an amount of all vinyl chloride resin fine particles is preferably not less than 15 parts by mass and not more than 35 parts by mass per 100 parts by mass, in total, of the (a) vinyl chloride resin particles and the powder of surface skin material made of vinyl chloride resin. When the amount of all vinyl chloride resin fine particles per 100 parts by mass, in total, of the vinyl chloride resin particles and the powder of surface skin material made of vinyl chloride resin is not less than the lower limit set forth above, powder fluidity of the obtained vinyl chloride resin composition can be even further improved. Moreover, when the amount of all vinyl chloride resin fine particles per 100 parts by mass, in total, of the vinyl chloride resin particles and the powder of surface skin material made of vinyl chloride resin is not more than the upper limit set forth above, reduction of strength of an obtained vinyl chloride resin molded product can be inhibited.

[7] In the vinyl chloride resin composition according to any one of the foregoing [4] to [6], proportional content of the (b-1) vinyl chloride resin fine particles B in the powder composition is preferably not less than 2.0 mass% and not more than 25 mass%. When the proportional content of the vinyl chloride resin fine particles B in the powder composition containing the powder of surface skin material made of vinyl chloride resin is not less than the lower limit set forth above, powder fluidity of the vinyl chloride resin composition containing this powder composition can be even further improved. Moreover, when the proportional content of the vinyl chloride resin fine particles B in the powder composition containing the powder of surface skin material made of vinyl chloride resin is not more than the upper limit set forth above, reduction of strength of an obtained vinyl chloride resin molded product can be inhibited.

[8] In the vinyl chloride resin composition according to any one of the foregoing [1] to [7], the powder composition preferably has a drop time of 35 seconds or less. When the drop time of the powder composition containing the powder of surface skin material made of vinyl chloride resin is not more than the upper limit set forth above in this manner, powder fluidity of the vinyl chloride resin composition containing this powder composition can be even further improved.

Note that the drop time of a powder composition referred to in the present disclosure can be measured by a method described in the EXAMPLES section.

[9] In the vinyl chloride resin composition according to any one of the foregoing [1] to [8], the powder composition is preferably contained in a proportion of not less than 3 parts by mass and not more than 30 parts by mass per 100 parts by mass of the (a) vinyl chloride resin particles. When the proportional content of the powder composition containing the powder of surface skin material made of vinyl chloride resin per 100 parts by mass of the vinyl chloride resin particles is not less than the lower limit set forth above, low-temperature tensile elongation of a vinyl chloride resin molded product produced using the obtained vinyl chloride resin composition can be improved, waste of surface skin material made of vinyl chloride resin can be efficiently recycled, and environmental impact can be reduced. Moreover, when the proportional content of the powder composition containing the powder of surface skin material made of vinyl chloride resin per 100 parts by mass of the vinyl chloride resin particles is not more than the upper limit set forth above, powder fluidity of the obtained vinyl chloride resin composition can be even further improved.

[10] In the vinyl chloride resin composition according to any one of the foregoing [1] to [9], the (c) plasticizer preferably includes either or both of a trimellitic acid ester and a polyester. When the vinyl chloride resin composition contains a trimellitic acid ester, heat shrinkage resistance of a vinyl chloride resin molded product formed using the vinyl chloride resin composition can be improved. Moreover, when the vinyl chloride resin composition contains a polyester, fluidity of the vinyl chloride resin composition can be even further improved, and flexibility at low temperature of a vinyl chloride resin molded product formed using the vinyl chloride resin composition can be increased.

[11] The vinyl chloride resin composition according to any one of the foregoing [1] to [10] is preferably used in powder molding. By using the vinyl chloride resin composition set forth above in powder molding in this manner, it is easy to obtain a vinyl chloride resin molded product that can be favorably used as an automobile interior material such as a surface skin for an automobile instrument panel, for example.

[12] The vinyl chloride resin composition according to any one of the foregoing [1] to [11] is preferably used in powder slush molding. By using the vinyl chloride resin composition set forth above in powder slush molding in this manner, it is even easier to obtain a vinyl chloride resin molded product that can be favorably used as an automobile interior material such as a surface skin for an automobile instrument panel, for example.

Moreover, with the aim of advantageously solving the problem set forth above, [13] a presently disclosed method of producing a vinyl chloride resin composition comprises: preparing a raw material vinyl chloride resin composition containing (a) vinyl chloride resin particles, (b) vinyl chloride resin fine particles A, and (c) a plasticizer; preparing a powder composition containing a powder of surface skin material made of vinyl chloride resin; and adding and mixing the powder composition into the raw material vinyl chloride resin composition. By adding and mixing a powder composition that contains a powder of surface skin material made of vinyl chloride resin into a raw material vinyl chloride resin composition in this manner, it is easy to obtain a vinyl chloride resin composition that can inhibit reduction of powder fluidity.

[14] In the method of producing a vinyl chloride resin composition according to the foregoing [13], the preparing a powder composition containing a powder of surface skin material made of vinyl chloride resin preferably includes adding and mixing (b-1) vinyl chloride resin fine particles B into the powder of surface skin material made of vinyl chloride resin. By adding and mixing (b-1) vinyl chloride resin fine particles B into a powder of surface skin material made of vinyl chloride resin in this manner, it is easy to obtain a vinyl chloride resin composition having even better powder fluidity.

Furthermore, with the aim of advantageously solving the problem set forth above, [15] a presently disclosed vinyl chloride resin molded product is obtained through molding of the vinyl chloride resin composition according to any one of the foregoing [1] to [12]. By molding the vinyl chloride resin composition set forth above, it is easy to obtain a vinyl chloride resin molded product.

[16] The vinyl chloride resin molded product according to the foregoing [15] is preferably for an automobile instrument panel surface skin. The vinyl chloride resin molded product set forth above can be favorably used as a surface skin of an automobile instrument panel.

Also, with the aim of advantageously solving the problem set forth above, [17] a presently disclosed laminate comprises: a foamed polyurethane molded product; and the vinyl chloride resin molded product according to the foregoing [15] or [16]. By using the vinyl chloride resin molded product set forth above, it is easy to obtain a laminate including the vinyl chloride resin molded product and a foamed polyurethane molded product.

[18] The laminate according to the foregoing [17] is preferably for an automobile instrument panel. The laminate set forth above can be favorably used as an automobile instrument panel.

### (Advantageous Effect)

According to the present disclosure, it is possible to provide a vinyl chloride resin composition that can inhibit reduction of powder fluidity even when containing a finely ground product of surface skin material made of vinyl chloride resin and a method of producing this vinyl chloride resin composition.

Moreover, according to the present disclosure, it is possible to provide a vinyl chloride resin molded product obtained through molding of this vinyl chloride resin composition.

Furthermore, according to the present disclosure, it is possible to provide a laminate including this vinyl chloride resin molded product.

### DETAILED DESCRIPTION

The following provides a detailed description of embodiments of the present disclosure.

The presently disclosed vinyl chloride resin composition can be used, for example, in formation of the presently disclosed vinyl chloride resin molded product. Moreover, the presently disclosed vinyl chloride resin composition can be produced, for example, by the presently disclosed method of producing a vinyl chloride resin composition. Furthermore, a vinyl chloride resin molded product formed using the presently disclosed vinyl chloride resin composition can suitably be used, for example, as an automobile interior material such as a surface skin included in an automobile interior component such as an automobile instrument panel or a door trim.

The presently disclosed vinyl chloride resin molded product can be used, for example, in formation of the presently disclosed laminate. Moreover, a laminate formed using the presently disclosed vinyl chloride resin molded product can suitably be used, for example, as an automobile interior material used in production of an automobile interior component such as an automobile instrument panel or a door trim.

### (Vinyl chloride resin composition)

A feature of the presently disclosed vinyl chloride resin composition is that it contains: (a) vinyl chloride resin particles; (b) vinyl chloride resin fine particles A; (c) a plasticizer; and (d) a powder composition containing a powder of surface skin material made of vinyl chloride resin. Note that the presently disclosed vinyl chloride resin composition may optionally further contain additives in addition to the (a) vinyl chloride resin particles, (b) vinyl chloride resin fine particles A, (c) plasticizer, and (d) powder composition containing a powder of surface skin material made of vinyl chloride resin.

As a result of the presently disclosed vinyl chloride resin composition containing vinyl chloride resin fine particles, the presently disclosed vinyl chloride resin composition can inhibit reduction of powder fluidity even though it contains a powder of surface skin material made of vinyl chloride resin. Consequently, a vinyl chloride resin molded product that is suitable as an automobile interior material such as a surface skin for an automobile instrument panel or a surface skin for a door trim, for example, can be obtained well using the presently disclosed vinyl chloride resin composition.

Note that from a viewpoint of easily obtaining a vinyl chloride resin molded product that can be favorably used as an automobile interior material, for example, using the presently disclosed vinyl chloride resin composition, the presently disclosed vinyl chloride resin composition is preferably used in powder molding, and is more preferably used in powder slush molding.

### <Vinyl chloride resin>

Examples of vinyl chloride resins that can form the (a) vinyl chloride resin particles and the (b) vinyl chloride resin fine particles A include homopolymers of vinyl chloride and also vinyl chloride copolymers preferably comprising 50 mass% or more of vinyl chloride units, and more preferably comprising 70 mass% or more of vinyl chloride units. No specific limitations are placed on comonomers in a vinyl chloride copolymer, and any of those that are described in WO2016/098344A1, for example, can be used individually or in combination in a freely selected ratio.

The vinyl chloride resin can be produced by a conventionally known production method such as suspension polymerization, emulsion polymerization, solution polymerization, or bulk polymerization.

In the presently disclosed vinyl chloride resin composition, the (a) vinyl chloride resin particles normally function as a matrix resin, whereas the (b) vinyl chloride resin fine particles A function as a subsequently described dusting agent (powder fluidity modifier). Moreover, it is preferable that the (a) vinyl chloride resin particles are produced by suspension polymerization, and it is also preferable that the (b) vinyl chloride resin fine particles A are produced by emulsion polymerization.

Note that the term "resin particles" as used in the present disclosure refers to particles having a particle diameter of 30 µm or more, whereas the term "resin fine particles" as used in the present disclosure refers to particles having a particle diameter of less than 30 µm.

### <(a) Vinyl chloride resin particles>

The volume-average particle diameter of the (a) vinyl chloride resin particles is normally 30 µm or more, preferably 50 µm or more, and more preferably 100 µm or more, and is preferably 500 µm or less, and more preferably 200 µm or less. When the volume-average particle diameter of the (a) vinyl chloride resin particles is not less than any of the lower limits set forth above, powder fluidity of the vinyl chloride resin composition can be even further improved. Moreover, when the volume-average particle diameter of the (a) vinyl chloride resin particles is not more than any of the upper limits set forth above, meltability of the vinyl chloride resin composition improves, and surface smoothness of a vinyl chloride resin molded product formed using the composition can be improved.

The average degree of polymerization of the vinyl chloride resin forming the (a) vinyl chloride resin particles is preferably 1,000 or more, and more preferably 1,300 or more, and is preferably 5,000 or less, more preferably 4,000 or less, and even more preferably 3,500 or less. When the average degree of polymerization of the vinyl chloride resin forming the (a) vinyl chloride resin particles is within any of the ranges set forth above, physical strength of a vinyl chloride resin molded product formed using the vinyl chloride resin composition can be sufficiently ensured while also improving tensile characteristics (particularly tensile elongation) of the vinyl chloride resin molded product, for example. A vinyl chloride resin molded product having good tensile elongation can suitably be used as an automobile interior material, such as a surface skin of an automobile instrument panel, that has excellent ductility and that ruptures as designed without scattering of fragments when an airbag expands and is deployed, for example. Moreover, when the average degree of polymerization of the vinyl chloride resin forming the (a) vinyl chloride resin particles is not more than any of the upper limits set forth above, meltability of the vinyl chloride resin composition can be improved. Note that the average degree of polymerization is measured in accordance with JIS K6720-2.

### <(b) Vinyl chloride resin fine particles A>

The vinyl chloride resin fine particles A function as a dusting agent (powder fluidity modifier) that improves powder fluidity of the vinyl chloride resin composition and are a component that is distinguished from the (a) vinyl chloride resin particles described above.

The volume-average particle diameter of the (b) vinyl chloride resin fine particles A is normally 30 µm or less, preferably 10 µm or less, and more preferably 5 µm or less, and is preferably 0.1 µm or more, and more preferably 1 µm or more. When the volume-average particle diameter of the (b) vinyl chloride resin fine particles A is not less than any of the lower limits set forth above, the (b) vinyl chloride resin fine particles A are not too small to function as a dusting agent, for example, and powder fluidity of the vinyl chloride resin composition can be even further improved. Moreover, when the volume-average particle diameter of the (b) vinyl chloride resin fine particles A is not more than any of the upper limits set forth above, meltability of the vinyl chloride resin composition increases, and surface smoothness of a formed vinyl chloride resin molded product can be improved.

The average degree of polymerization of the vinyl chloride resin forming the (b) vinyl chloride resin fine particles A is preferably 500 or more, and more preferably 700 or more, and is preferably 2,600 or less, and more preferably 2,400 or less. When the average degree of polymerization of the vinyl chloride resin forming the (b) vinyl chloride resin fine particles A serving as a dusting agent is not less than any of the lower limits set forth above, powder fluidity of the vinyl chloride resin composition can be even further improved, and low-temperature tensile elongation of a shaped product obtained using the composition also improves. Moreover, when the average degree of polymerization of the vinyl chloride resin forming the (b) vinyl chloride resin fine particles A is not more than any of the upper limits set forth above, meltability of the vinyl chloride resin composition improves, and surface smoothness of a vinyl chloride resin molded product formed using the composition can be improved.

The content of the (b) vinyl chloride resin fine particles A is preferably 10 parts by mass or more, and more preferably 20 parts by mass or more per 100 parts by mass of the (a) vinyl chloride resin particles, and is preferably 40 parts by mass or less, and more preferably 30 parts by mass or less per 100 parts by mass of the (a) vinyl chloride resin particles.

### <(c) Plasticizer>

The presently disclosed vinyl chloride resin composition contains (c) a plasticizer. The inclusion of the (c) plasticizer in the vinyl chloride resin composition makes it possible for a formed vinyl chloride resin molded product to display sufficient flexibility, thus enabling suitable use of this vinyl chloride resin molded product as an automobile interior material, for example.

The content of the (c) plasticizer in the vinyl chloride resin composition is preferably 60 parts by mass or more, and more preferably 70 parts by mass or more relative to 100 parts by mass of vinyl chloride resin (i.e., vinyl chloride resin forming the (a) vinyl chloride resin particles, (b) vinyl chloride resin fine particles A, and subsequently described (b-1) vinyl chloride resin fine particles B; same applies below), and is preferably 130 parts by mass or less, and more preferably 120 parts by mass or less relative to 100 parts by mass of vinyl chloride resin. When the content of the (c) plasticizer in the vinyl chloride resin composition is not less than any of the lower limits set forth above relative to 100 parts by mass of vinyl chloride resin, flexibility of a formed vinyl chloride resin molded product can be increased. On the other hand, when the content of the (c) plasticizer in the vinyl chloride resin composition is not more than any of the upper limits set forth above relative to 100 parts by mass of vinyl chloride resin, powder fluidity of the vinyl chloride resin composition can be even further improved.

Although no specific limitations are placed on the (c) plasticizer that is contained in the presently disclosed vinyl chloride resin composition, it is preferable that either or both of (c1) a polyester and (c2) a trimellitic acid ester are used, for example. Note that plasticizers other than the (c1) polyester and the (c2) trimellitic acid ester (hereinafter, also referred to as "(c3) other plasticizers") may be used as the (c) plasticizer.

### <<(c1) Polyester>>

The (c) plasticizer preferably includes (c1) a polyester. When the (c) plasticizer includes the (c1) polyester, heat shrinkage resistance of a formed vinyl chloride resin molded product can be increased.

Polyesters such as a polyester including a structural unit derived from adipic acid (adipic acid polyester), a polyester including a structural unit derived from sebacic acid (sebacic acid polyester), and a polyester including a structural unit derived from phthalic acid (phthalic acid polyester), for example, can be used without any specific limitations as the (c1) polyester that can be included in the (c) plasticizer. Note that one of these polyesters may be used individually, or two or more of these polyesters may be used as a mixture in a freely selected ratio.

Of these polyesters, it is preferable to use a polyester that includes a structural unit derived from adipic acid as the (c1) polyester from a viewpoint of further increasing heat shrinkage resistance of a formed vinyl chloride resin molded product, and particularly preferable to use a polyester that includes a structural unit derived from adipic acid and a structural unit derived from 3-methyl-1,5-pentanediol.

For convenience of description, a polyester that includes a structural unit derived from adipic acid and a structural unit derived from 3-methyl-1,5-pentanediol is referred to below as a "polyester A".

Although the polyester A that includes the specific structural units described above may include a structural unit other than an adipic acid-derived structural unit and a 3-methyl-1,5-pentanediol-derived structural unit, the total of adipic acid-derived structural units and 3-methyl-1,5-pentanediol-derived structural units is preferably 50 mass% or more, and more preferably 80 mass% or more of all structural units. Moreover, it is preferable that the polyester A including the specific structural units described above only includes adipic acid-derived structural units and 3-methyl-1,5-pentanediol-derived structural units as repeating units.

The polyester A including the specific structural units described above can be obtained through condensation polymerization of adipic acid and 3-methyl-1,5-pentanediol without any specific limitations. This condensation polymerization can be performed in the presence of a catalyst. Moreover, the condensation polymerization can be performed using an alcohol and/or a monobasic acid as a terminal stopping component. The condensation polymerization of adipic acid and 3-methyl-1,5-pentanediol and the termination reaction of the obtained polycondensate and the terminal stopping component may be performed in one go or may be performed separately. A product that is obtained through the condensation polymerization and the termination reaction may be subjected to after-treatment such as distillation. Commonly known conditions can be adopted as reaction conditions of the condensation polymerization, such as the used amounts of the above-described monomers, catalyst, and terminal stopping component.

Also note that a commercially available product may be used as the polyester A including the specific structural units described above.

The catalyst used in the condensation polymerization reaction is not specifically limited and may be dibutyltin oxide, tetraalkyl titanate, or the like, for example.

Examples of alcohols that can be used as the terminal stopping component include methanol, ethanol, propanol, isopropanol, butanol, isobutanol, pentanol, hexanol, isohexanol, heptanol, isoheptanol, octanol, isooctanol, 2-ethylhexanol, nonanol, isononanol, decanol, isodecanol, undecanol, isoundecanol, dodecanol, tridecanol, isotridecanol, tetradecanol, pentadecanol, hexadecanol, heptadecanol, octadecanol, cellosolve, carbitol, phenol, nonylphenol, benzyl alcohol, and mixtures thereof.

Examples of monobasic acids that can be used as the terminal stopping component include acetic acid, propionic acid, butyric acid, isobutyric acid, valeric acid, pivalic acid, caproic acid, heptanoic acid, caprylic acid, 2-ethylhexanoic acid, pelargonic acid, capric acid, undecanoic acid, lauric acid, tridecanoic acid, myristic acid, pentadecanoic acid, palmitic acid, heptadecanoic acid, stearic acid, benzoic acid, and mixtures thereof.

Of these examples, 2-ethylhexanol is preferable as the terminal stopping component.

The number-average molecular weight of the polyester A including the specific structural units described above is preferably 1,000 or more, and more preferably 2,000 or more, and is preferably 10,000 or less, and more preferably 7,000 or less.

Note that the "number-average molecular weight" can be measured by VPO (vapor pressure osmometry).

Moreover, the polyester A including the specific structural units described above preferably has an acid value of 1 or less.

Furthermore, the polyester A including the specific structural units described above preferably has a hydroxyl value of 30 or less.

The viscosity of the polyester A including the specific structural units described above is preferably 500 mPa·s or more, and more preferably 1,000 mPa·s or more, and is preferably 8,000 mPa·s or less, and more preferably 5,000 mPa·s or less.

Note that the "viscosity" can be measured in accordance with JIS Z8803 at a temperature of 23°C.

The proportional content of the (c1) polyester among the (c) plasticizer is preferably 50 mass% or more, more preferably 55 mass% or more, and even more preferably 60 mass% or more, and is preferably 97 mass% or less, and more preferably 96 mass% or less. When the proportional content of the (c1) polyester among the (c) plasticizer is not less than any of the lower limits set forth above, heat shrinkage resistance of a formed vinyl chloride resin molded product can be further increased. On the other hand, when the proportional content of the (c1) polyester among the (c) plasticizer is not more than any of the upper limits set forth above, flexibility at low temperature of a formed vinyl chloride resin molded product can be maintained well.

The content of the (c1) polyester in the vinyl chloride resin composition is preferably 30 parts by mass or more, more preferably 40 parts by mass or more, even more preferably 50 parts by mass or more, and further preferably 60 parts by mass or more relative to 100 parts by mass of the previously described vinyl chloride resin, and is preferably 120 parts by mass or less, and more preferably 110 parts by mass or less relative to 100 parts by mass of the previously described vinyl chloride resin. When the content of the (c1) polyester in the vinyl chloride resin composition is not less than any of the lower limits set forth above, heat shrinkage resistance of a formed vinyl chloride resin molded product can be further increased. On the other hand, when the content of the (c1) polyester in the vinyl chloride resin composition is not more than any of the upper limits set forth above, powder fluidity of the vinyl chloride resin composition can be even further improved.

### <<(c2) Trimellitic acid ester>>

The (c) plasticizer preferably includes (c2) a trimellitic acid ester. When the (c) plasticizer includes the (c2) trimellitic acid ester, powder fluidity of the vinyl chloride resin composition can be increased because the (c2) trimellitic acid ester is absorbed well by the previously described vinyl chloride resin ((a) vinyl chloride resin particles, (b) vinyl chloride resin fine particles A, and (b-1) vinyl chloride resin fine particles B). Moreover, when the (c) plasticizer includes the (c2) trimellitic acid ester, flexibility at low temperature of a formed vinyl chloride resin molded product can be increased.

The (c2) trimellitic acid ester that is included in the (c) plasticizer is preferably an ester compound of trimellitic acid and a monohydric alcohol.

Specific examples of the monohydric alcohol include, but are not specifically limited to, aliphatic alcohols such as 1-hexanol, 1-heptanol, 1-octanol, 2-ethylhexanol, 1-nonanol, 1-decanol, 1-undecanol, and 1-dodecanol. Of these examples, an aliphatic alcohol having a carbon number of 6 to 18 is preferable, and a linear aliphatic alcohol having a carbon number of 6 to 18 is more preferable as the monohydric alcohol.

In particular, the (c2) trimellitic acid ester is preferably a triester compound in which substantially all the carboxy groups of trimellitic acid are esterified with the above-described monohydric alcohol. Alcohol residue portions of the triester compound may all be derived from the same alcohol or may each be derived from a different alcohol.

The (c2) trimellitic acid ester may be composed of a single compound or may be a mixture of different compounds.

Specific examples of the (c2) trimellitic acid ester that are suitable include tri-n-hexyl trimellitate, tri-n-heptyl trimellitate, tri-n-octyl trimellitate, tri(2-ethylhexyl) trimellitate, tri-n-nonyl trimellitate, tri-n-decyl trimellitate, triisodecyl trimellitate, tri-n-undecyl trimellitate, tri-n-dodecyl trimellitate, trimellitic acid trialkyl esters (esters including two or more alkyl groups of different carbon numbers in a molecule (with a proviso that the carbon number is 6 to 18)), trimellitic acid tri-n-alkyl esters (esters including two or more alkyl groups of different carbon numbers in a molecule (with a proviso that the carbon number is 6 to 18)), and mixtures of any of the preceding examples.

Specific examples of the (c2) trimellitic acid ester that are more preferable include tri-n-octyl trimellitate, tri(2-ethylhexyl) trimellitate, tri-n-nonyl trimellitate, tri-n-decyl trimellitate, trimellitic acid tri-n-alkyl esters (esters including two or more alkyl groups of different carbon numbers in a molecule (with a proviso that the carbon number is 6 to 18)), and mixtures of any of the preceding examples.

The proportional content of the (c2) trimellitic acid ester among the (c) plasticizer is preferably 5 mass% or more, and more preferably 10 mass% or more, and is more preferably 97 mass% or less, and even more preferably 96 mass% or less. When the proportional content of the (c2) trimellitic acid ester among the (c) plasticizer is not less than any of the lower limits set forth above, powder fluidity of the vinyl chloride resin composition can be further increased, and flexibility at low temperature of a formed vinyl chloride resin molded product can also be further increased. On the other hand, when the proportional content of the (b2) trimellitic acid ester among the (c) plasticizer is not more than any of the upper limits set forth above, heat shrinkage resistance of a formed vinyl chloride resin molded product can be increased.

The content of the (c2) trimellitic acid ester in the vinyl chloride resin composition is preferably 5 parts by mass or more relative to 100 parts by mass of the previously described vinyl chloride resin, and is preferably 80 parts by mass or less, more preferably 60 parts by mass or less, and even more preferably 50 parts by mass or less relative to 100 parts by mass of the previously described vinyl chloride resin. When the content of the (c2) trimellitic acid ester in the vinyl chloride resin composition is not less than the lower limit set forth above, powder fluidity of the vinyl chloride resin composition can be further increased, and flexibility at low temperature of a formed vinyl chloride resin molded product can also be further increased. On the other hand, when the content of the (c2) trimellitic acid ester in the vinyl chloride resin composition is not more than any of the upper limits set forth above, heat shrinkage resistance of a formed vinyl chloride resin molded product can be increased.

### <<(c3) Other plasticizers>>

The (c) plasticizer that is contained in the vinyl chloride resin composition may optionally include (c3) other plasticizers besides the (c1) polyester and the (c2) trimellitic acid ester described above.

Specific examples of (c3) other plasticizers include plasticizers other than the (c1) polyester and the (c2) trimellitic acid ester described above among plasticizers that are described in WO2016/098344A1. Of these plasticizers, epoxidized soybean oil is preferable from a viewpoint of further increasing flexibility at low temperature of a formed vinyl chloride resin molded product.

The proportional content of (c3) other plasticizers among the (c) plasticizer is not specifically limited but is preferably not less than 0 mass% and not more than 15 mass%. When the proportional content of (c3) other plasticizers among the (c) plasticizer is within the range set forth above, post-heating flexibility at low temperature of a formed vinyl chloride resin molded product can be increased.

Moreover, the content of (c3) other plasticizers in the vinyl chloride resin composition is not specifically limited but can be set as not less than 0 parts by mass and not more than 15 parts by mass relative to 100 parts by mass of the previously described vinyl chloride resin.

Note that from a viewpoint of further increasing flexibility at low temperature of a formed vinyl chloride resin molded product, it is preferable to use not less than 2 parts by mass and not more than 7 parts by mass of epoxidized vegetable oil such as epoxidized soybean oil as (c3) another plasticizer relative to 100 parts by mass of the previously described vinyl chloride resin.

### <(d) Powder composition containing powder of surface skin material made of vinyl chloride resin>

The presently disclosed vinyl chloride resin composition contains (d) a powder composition containing a powder of surface skin material made of vinyl chloride resin. The powder of surface skin material made of vinyl chloride resin is a powder that is obtained through grinding of waste of surface skin material made of vinyl chloride resin (vinyl chloride resin molded product). The surface skin material made of vinyl chloride resin may be used surface skin material made of vinyl chloride resin that has been separated/recovered from an automobile instrument panel or the like or may be cutting remnants such as edges or burrs arising when surface skin material made of vinyl chloride resin is produced and then processed. Alternatively, the surface skin material made of vinyl chloride resin may be an unused product of surface skin material made of vinyl chloride resin, such as surplus stock.

The powder of surface skin material made of vinyl chloride resin is a powder obtained through grinding of surface skin material that contains a vinyl chloride resin and a plasticizer and that optionally further contains additives. Accordingly, the powder of surface skin material made of vinyl chloride resin is normally composed of particles that contain a vinyl chloride resin and a plasticizer and that optionally further contain additives.

Note that the vinyl chloride resin, plasticizer, and additives may be the same as any of those that have previously been described or that are described hereinafter.

Although no specific limitations are placed on the size of the powder of surface skin material made of vinyl chloride resin, from a viewpoint of even further improving powder fluidity of the vinyl chloride resin composition, the volume-average particle diameter of the powder of surface skin material made of vinyl chloride resin is preferably 50 µm or more, and more preferably 80 µm or more, and is preferably 500 µm or less, and more preferably 300 µm or less.

The powder of surface skin material made of vinyl chloride resin can be obtained by cutting waste of surface skin material made of vinyl chloride resin using a sheet pelletizer or the like to obtain a coarsely ground product, and then finely grinding the coarsely ground product by cryogenic grinding, for example, but is not specifically limited to being obtained in this manner.

The amount of the powder of surface skin material made of vinyl chloride resin is preferably 1 part by mass or more, and more preferably 3 parts by mass or more per 100 parts by mass of the vinyl chloride resin composition, and is preferably 40 parts by mass or less, and more preferably 30 parts by mass or less per 100 parts by mass of the vinyl chloride resin composition. When the amount of the powder of surface skin material made of vinyl chloride resin per 100 parts by mass of the vinyl chloride resin composition is not less than any of the lower limits set forth above, waste of surface skin material made of vinyl chloride resin can be efficiently recycled, environmental impact can be reduced, and low-temperature tensile elongation of a vinyl chloride resin molded product produced using the obtained vinyl chloride resin composition can be improved. When the amount of the powder of surface skin material made of vinyl chloride resin per 100 parts by mass of the vinyl chloride resin composition is not more than any of the upper limits set forth above, powder fluidity of the vinyl chloride resin composition can be even further improved.

Moreover, from the same viewpoints as described above, the amount of the powder of surface skin material made of vinyl chloride resin is preferably 1 part by mass or more, and more preferably 3 parts by mass or more per 100 parts by mass of the (a) vinyl chloride resin particles, and is preferably 50 parts by mass or less, and more preferably 40 parts by mass or less per 100 parts by mass of the (a) vinyl chloride resin particles.

The powder composition preferably further contains (b-1) vinyl chloride resin fine particles B. When the powder composition further contains the (b-1) vinyl chloride resin fine particles B, powder fluidity of the vinyl chloride resin composition can be even further improved. Note that the (b-1) vinyl chloride resin fine particles B can be the same as those that were previously described for the (b) vinyl chloride resin fine particles A.

Moreover, a method of obtaining a powder composition that further contains (b-1) vinyl chloride resin fine particles B is described in the subsequent "Production method of vinyl chloride resin composition" section.

Although no specific limitations are placed on the proportional content of the (b-1) vinyl chloride resin fine particles B in the powder composition, the proportional content of the (b-1) vinyl chloride resin fine particles B when the powder composition is taken to be 100 mass% is preferably 2.0 mass% or more, and more preferably 3.0 mass% or more, and is preferably 25 mass% or less, and more preferably 20 mass% or less. When the proportional content of the (b-1) vinyl chloride resin fine particles B in the powder composition is not less than any of the lower limits set forth above, powder fluidity of the vinyl chloride resin composition can be even further improved. Moreover, when the proportional content of the (b-1) vinyl chloride resin fine particles B in the powder composition is not more than any of the upper limits set forth above, reduction of strength of an obtained vinyl chloride resin molded product can be inhibited.

### <<Proportional content>>

The proportional content of the powder composition in the vinyl chloride resin composition is preferably 1 part by mass or more, and more preferably 3 parts by mass or more per 100 parts by mass of the (a) vinyl chloride resin particles, and is preferably 40 parts by mass or less, and more preferably 30 parts by mass or less per 100 parts by mass of the (a) vinyl chloride resin particles. When the proportional content of the powder composition in the vinyl chloride resin composition is not less than any of the lower limits set forth above, low-temperature tensile elongation of a vinyl chloride resin molded product produced using the obtained vinyl chloride resin composition can be improved, waste of surface skin material made of vinyl chloride resin can be efficiently recycled, and environmental impact can be reduced. Moreover, when the proportional content of the powder composition containing the powder of surface skin material made of vinyl chloride resin per 100 parts by mass of the vinyl chloride resin particles is not more than any of the upper limits, powder fluidity of the obtained vinyl chloride resin composition can be even further improved.

### <<Properties>>

From a viewpoint of even further improving powder fluidity of the vinyl chloride resin composition, the drop time of the powder composition is preferably 35 seconds or less, more preferably 30 seconds or less, and even more preferably 25 seconds or less.

Moreover, from a viewpoint of even further improving powder fluidity of the vinyl chloride resin composition, the bulk density of the powder composition is preferably 0.40 g/cm³ or more, and more preferably 0.45 g/cm³ or more, and is preferably 0.60 g/cm³ or less, and more preferably 0.55 g/cm³ or less.

Note that the bulk density of the powder composition referred to in the present disclosure can be measured by a method described in the EXAMPLES section.

### <Additives>

The presently disclosed vinyl chloride resin composition may further contain various additives besides the components set forth above. Examples of additives that may be used include, but are not specifically limited to, lubricants; stabilizers such as perchloric acid-treated hydrotalcite, zeolites, β-diketones, and fatty acid metal salts; mold release agents; dusting agents other than the previously described vinyl chloride resin fine particles A and B; impact modifiers; perchloric acid compounds other than perchloric acid-treated hydrotalcite (sodium perchlorate, potassium perchlorate, etc.); antioxidants; fungicides; flame retardants; antistatic agents; fillers; light stabilizers; foaming agents; and pigments.

Additives that are described in WO2016/098344A1, for example, can be used as the aforementioned additives that can be contained in the presently disclosed vinyl chloride resin composition, and suitable amounts of these additives can also be the same as described in WO2016/098344A1.

### <Proportional content of vinyl chloride resin fine particles>

The amount of all vinyl chloride resin fine particles (i.e., the total of the (b) vinyl chloride resin fine particles A and the optionally added (b-1) vinyl chloride resin fine particles B; same applies below) in the presently disclosed vinyl chloride resin composition is preferably 3 parts by mass or more, and more preferably 4 parts by mass or more per 100 parts by mass of the powder of surface skin material made of vinyl chloride resin, and is preferably 40 parts by mass or less, and more preferably 20 parts by mass or less per 100 parts by mass of the powder of surface skin material made of vinyl chloride resin. When the amount of all vinyl chloride resin fine particles per 100 parts by mass of the powder of surface skin material made of vinyl chloride resin is not less than any of the lower limits set forth above, powder fluidity of the obtained vinyl chloride resin composition can be even further improved. Moreover, when the amount of all vinyl chloride resin fine particles per 100 parts by mass of the powder of surface skin material made of vinyl chloride resin is not more than any of the upper limits set forth above, reduction of strength of an obtained vinyl chloride resin molded product can be inhibited.

From the same viewpoints as described above, the amount of all vinyl chloride resin fine particles in the presently disclosed vinyl chloride resin composition is preferably 3 parts by mass or more, more preferably 5 parts by mass or more, and even more preferably 15 parts by mass or more per 100 parts by mass, in total, of the (a) vinyl chloride resin particles and the powder of surface skin material made of vinyl chloride resin, and is preferably 40 parts by mass or less, more preferably 35 parts by mass or less, and even more preferably 30 parts by mass or less per 100 parts by mass, in total, of the (a) vinyl chloride resin particles and the powder of surface skin material made of vinyl chloride resin.

Moreover, from the same viewpoints as described above, the amount of all vinyl chloride resin fine particles in the presently disclosed vinyl chloride resin composition when the vinyl chloride resin composition is taken to be 100 mass% is preferably 7 mass% or more, and more preferably 8 mass% or more, and is preferably 15 mass% or less, and more preferably 12 mass% or less.

### <Properties>

The drop time of the vinyl chloride resin composition is preferably 20 seconds or less, more preferably 19 seconds or less, and even more preferably 18 seconds or less. When the drop time of the vinyl chloride resin composition is not more than any of the upper limits set forth above, the vinyl chloride resin composition has even better powder fluidity.

Moreover, from a viewpoint of even further improving powder fluidity of the vinyl chloride resin composition, the bulk density of the vinyl chloride resin composition is preferably 0.50 g/cm³ or more, and more preferably 0.52 g/cm³ or more, and is preferably 0.70 g/cm³ or less, and more preferably 0.65 g/cm³ or less.

Note that the bulk density of the vinyl chloride resin composition referred to in the present disclosure can be measured by a method described in the EXAMPLES section.

### (Production method of vinyl chloride resin composition)

The presently disclosed vinyl chloride resin composition can be produced by mixing the components described above.

The presently disclosed vinyl chloride resin composition can more suitably be produced by the presently disclosed method of producing a vinyl chloride resin composition including: a step of preparing a raw material vinyl chloride resin composition containing (a) vinyl chloride resin particles, (b) vinyl chloride resin fine particles A, and (c) a plasticizer (raw material vinyl chloride resin composition preparation step); a step of preparing a powder composition containing a powder of surface skin material made of vinyl chloride resin (powder composition preparation step); and a step of adding and mixing the powder composition into the raw material vinyl chloride resin composition (mixing step), for example, but is not limited to being produced thereby. Each of the steps is described below.

### <Raw material vinyl chloride resin composition preparation step>

In the raw material vinyl chloride resin composition preparation step, a raw material vinyl chloride resin composition that contains (a) vinyl chloride resin particles, (b) vinyl chloride resin fine particles A, (c) a plasticizer, and various additives that are further compounded as necessary is prepared. The raw material vinyl chloride resin composition may be a commercially available product or may be produced through mixing of the above-described components. Note that the (a) vinyl chloride resin particles, (b) vinyl chloride resin fine particles A, (c) plasticizer, and various additives can be those that were previously described in the "Vinyl chloride resin composition" section.

The method by which the (a) vinyl chloride resin particles, the (b) vinyl chloride resin fine particles A, the (c) plasticizer, and the various additives that are further compounded as necessary are mixed is not specifically limited and may, for example, be a method in which components other than the vinyl chloride resin fine particles A among the aforementioned components are dry blended and in which the vinyl chloride resin fine particles A are subsequently added and mixed.

The dry blending is preferably carried out using a Henschel mixer. Although no specific limitations are placed on the temperature during dry blending, the temperature is preferably 50°C or higher, and more preferably 70°C or higher, and is preferably 200°C or lower.

### <Powder composition preparation step>

In the powder composition preparation step, a powder composition that contains a powder of surface skin material made of vinyl chloride resin and that optionally contains (b-1) vinyl chloride resin fine particles B is prepared. The powder composition may be a commercially available product or may be obtained by grinding surface skin material made of vinyl chloride resin into the form of a powder and then optionally adding and mixing the (b-1) vinyl chloride resin fine particles B into the resultant ground product.

The powder of surface skin material made of vinyl chloride resin can be obtained by grinding surface skin material made of vinyl chloride resin by a method that was previously described in the "(d) Powder composition containing powder of surface skin material made of vinyl chloride resin" section, but is not specifically limited to being obtained thereby. Moreover, preferred properties of the powder of surface skin material made of vinyl chloride resin are also the same as previously described in the "(d) Powder composition containing powder of surface skin material made of vinyl chloride resin" section. Furthermore, the (b) vinyl chloride resin fine particles A that were previously described in the "Vinyl chloride resin composition" section can be used as the (b-1) vinyl chloride resin fine particles B.

The powder composition preparation step preferably includes a step of adding and mixing the (b-1) vinyl chloride resin fine particles B into the powder of surface skin material made of vinyl chloride resin. By mixing the (b-1) vinyl chloride resin fine particles B with the powder of surface skin material made of vinyl chloride resin so as to obtain a powder composition that further contains the (b-1) vinyl chloride resin fine particles B, it is easy to obtain a vinyl chloride resin composition having even better powder fluidity using this powder composition.

No specific limitations are placed on the method by which the (b-1) vinyl chloride resin fine particles B are mixed with the powder of surface skin material made of vinyl chloride resin, and a commonly known mixing device such as a cooler mixer can be used.

From a viewpoint of even further inhibiting reduction of powder fluidity, it is preferable that the powder of surface skin material made of vinyl chloride resin is heated to a temperature of not lower than 70°C and not higher than 120°C before the (b-1) vinyl chloride resin fine particles B are added.

Moreover, from a viewpoint of even further inhibiting reduction of powder fluidity, it is preferable that the addition temperature (temperature of the powder of surface skin material made of vinyl chloride resin) when the (b-1) vinyl chloride resin fine particles B are added and mixed with the powder of surface skin material made of vinyl chloride resin is not lower than 70°C and not higher than 90°C.

The additive amount of the (b-1) vinyl chloride resin fine particles B is preferably 3 parts by mass or more, more preferably 5 parts by mass or more, even more preferably 10 parts by mass or more, and further preferably 15 parts by mass or more relative to 100 parts by mass of the powder of surface skin material made of vinyl chloride resin, and is preferably 30 parts by mass or less relative to 100 parts by mass of the powder of surface skin material made of vinyl chloride resin.

### <Mixing step>

In the mixing step, the raw material vinyl chloride resin composition that has been obtained in the raw material vinyl chloride resin composition preparation step and the powder composition that has been obtained in the powder composition preparation step are mixed to obtain a vinyl chloride resin composition.

No specific limitations are placed on the mixing method, and a commonly known mixing device such as a cooler mixer can be used. The mixing temperature is also not specifically limited and can be set as room temperature, for example.

The mixing ratio of the powder composition is preferably 5 parts by mass or more, and more preferably 10 parts by mass or more relative to 100 parts by mass of the raw material vinyl chloride resin composition, and is preferably 30 parts by mass or less, and more preferably 25 parts by mass or less relative to 100 parts by mass of the raw material vinyl chloride resin composition.

### (Vinyl chloride resin molded product)

The presently disclosed vinyl chloride resin molded product is obtained through molding of the presently disclosed vinyl chloride resin composition set forth above by any method. In particular, it is preferable that the presently disclosed vinyl chloride resin molded product is obtained through powder molding of the presently disclosed vinyl chloride resin composition set forth above, and more preferable that the presently disclosed vinyl chloride resin molded product is obtained through powder slush molding of the presently disclosed vinyl chloride resin composition set forth above.

The presently disclosed vinyl chloride resin molded product can suitably be used as an automobile interior material such as a surface skin of an automobile instrument panel.

In a case in which the vinyl chloride resin molded product is formed by powder slush molding, the mold temperature in powder slush molding is not specifically limited but is preferably set as 200°C or higher, and more preferably 220°C or higher, and is preferably set as 300°C or lower, and more preferably 280°C or lower.

The following method, for example, may be used in production of the vinyl chloride resin molded product without any specific limitations. In this method, the presently disclosed vinyl chloride resin composition is sprinkled onto a mold having a temperature within any of the ranges set forth above. The vinyl chloride resin composition is initially left for not less than 5 seconds and not more than 30 seconds and, after shaking off any excess vinyl chloride resin composition, is then further left for not less than 30 seconds and not more than 3 minutes at an arbitrary temperature. The mold is subsequently cooled to a temperature of not lower than 10°C and not higher than 60°C, and the presently disclosed vinyl chloride resin molded product that is obtained is removed from the mold. A sheet-shaped molded product that imitates the shape of the mold is obtained.

### (Laminate)

The presently disclosed laminate includes a foamed polyurethane molded product and the vinyl chloride resin molded product set forth above. The vinyl chloride resin molded product typically constitutes one surface of the laminate.

Moreover, the presently disclosed laminate can suitably be used as an automobile interior material forming an automobile interior component, and particularly forming an automobile instrument panel.

The method by which the foamed polyurethane molded product and the vinyl chloride resin molded product are stacked is not specifically limited and may, for example, be a method such as described below. Specifically, (1) a method in which the foamed polyurethane molded product and the vinyl chloride resin molded product are separately prepared and are subsequently adhered to one another by thermal fusion bonding, thermal adhesion, or using a commonly known adhesive, or (2) a method in which raw materials of the foamed polyurethane molded product such as an isocyanate and a polyol are caused to react and polymerize on the vinyl chloride resin molded product while carrying out polyurethane foaming by a commonly known method to directly form the foamed polyurethane molded product on the vinyl chloride resin molded product may be adopted. The latter method (2) is more suitable because it involves a simple process and enables laminates of various different shapes to be obtained while easily achieving strong adhesion of the vinyl chloride resin molded product and the foamed polyurethane molded product.

### EXAMPLES

The following provides a more specific description of the present disclosure based on examples. However, the present disclosure is not limited to the following examples. In the following description, "%" and "parts" used in expressing quantities are by mass, unless otherwise specified.

The powder fluidity of a vinyl chloride resin composition and a powder composition, and the tensile elongation and tensile stress at low temperature of a vinyl chloride resin molded product were measured or evaluated by the following methods.

### <Powder fluidity>

For each powder composition obtained in a production example and vinyl chloride resin composition obtained in an example, a bulk specific gravity measurement apparatus described in JIS K-6720 was used to measure the bulk density through the weight of the composition in a 100 mL vessel. The powder of the powder composition or vinyl chloride resin composition in the 100 mL vessel that was obtained during the above was returned to the bulk specific gravity measurement apparatus, and the time taken for all of the powder to flow when a damper was opened soon thereafter was measured to determine the drop time. Note that an evaluation of "does not flow" was given in a case in which flow of the powder was not complete even after 1 minute of waiting. The operations described above were each performed at normal temperature (23°C). Also note that a shorter drop time indicates better powder fluidity of the powder composition or vinyl chloride resin composition in a normal temperature state.

### <Tensile test>

Tensile characteristics at low temperature of a vinyl chloride resin molded product obtained in each example or comparative example were evaluated by measuring the tensile elongation (%) and the tensile stress (MPa) as follows.

The obtained vinyl chloride resin molded product (sheet) was punched out with a No. 1 dumbbell described in JIS K6251, and then the tensile elongation (%) and tensile stress (MPa) at -25°C were measured in accordance with JIS K7113 at a tensing rate of 200 mm/min. A larger value for tensile elongation indicates that the initial (unheated) vinyl chloride resin molded product has better ductility.

### (Production Example 1: Production of raw material vinyl chloride resin composition (virgin material) A)

With the exception of plasticizers (trimellitic acid ester and epoxidized soybean oil) and vinyl chloride resin fine particles A used as a dusting agent, components indicated in Table 1 were loaded into and mixed in a Henschel mixer. At the point at which the temperature of the mixture rose to 80°C, all of the plasticizers were added, and drying up of the mixture was caused to occur (i.e., the mixture changed to a dry state through absorption of the plasticizers by vinyl chloride resin particles serving as a vinyl chloride resin). Thereafter, once the dried-up mixture had cooled to a temperature of 70°C or lower, the vinyl chloride resin fine particles A used as a dusting agent were added to the mixture to produce a raw material vinyl chloride resin composition (virgin material) A.

### (Production Example 2: Production of raw material vinyl chloride resin composition (virgin material) B)

A raw material vinyl chloride resin composition (virgin material) B was produced in the same way as in Production Example 2 with the exception that in Production Example 1, an adipic acid polyester (produced by Adeka Corporation; product name: HPN-3130) was used instead of a trimellitic acid ester.

### (Production Example 3: Production of powder composition A)

The raw material vinyl chloride resin composition A obtained in Production Example 1 was sprinkled onto a textured mold that was heated to a temperature of 250°C and, after being left to melt for an arbitrary time, excess raw material vinyl chloride resin composition was shaken off. Thereafter, the textured mold onto which the raw material vinyl chloride resin composition had been sprinkled was placed at rest in an oven set to a temperature of 200°C, and, once 60 seconds had passed after being placed at rest, the textured mold was cooled with cooling water. Once the mold temperature had dropped to 40°C, a vinyl chloride resin molded sheet of 150 mm × 200 mm × 1 mm was removed from the mold as surface skin material made of vinyl chloride resin.

Next, the vinyl chloride resin molded sheet was cut to approximately 5 mm-square using a sheet pelletizer to obtain a coarsely ground product. The coarsely ground product was then ground by cryogenic grinding at -90°C to obtain a finely ground product (powder of surface skin material made of vinyl chloride resin) having a volume-average particle diameter of 110 µm as a powder composition A.

Although measurement of the drop time of the powder composition A was attempted, the powder composition A did not flow, and measurement was not possible.

### (Production Example 4: Production of powder composition B)

The raw material vinyl chloride resin composition A obtained in Production Example 1 was sprinkled onto a textured mold that was heated to a temperature of 250°C and, after being left to melt for an arbitrary time, excess raw material vinyl chloride resin composition was shaken off. Thereafter, the textured mold onto which the raw material vinyl chloride resin composition had been sprinkled was placed at rest in an oven set to a temperature of 200°C, and, once 60 seconds had passed after being placed at rest, the textured mold was cooled with cooling water. Once the mold temperature had dropped to 40°C, a vinyl chloride resin molded sheet of 150 mm × 200 mm × 1 mm was removed from the mold as surface skin material made of vinyl chloride resin.

Next, the vinyl chloride resin molded sheet was cut to approximately 5 mm-square using a sheet pelletizer to obtain a coarsely ground product. The coarsely ground product was then ground by cryogenic grinding at -90°C to obtain a finely ground product (powder of surface skin material made of vinyl chloride resin) having a volume-average particle diameter of 110 µm.

The finely ground product that had been obtained was heated to 100°C using an oven. Next, 5 parts of vinyl chloride resin fine particles B (produced by Shin Dai-ichi Vinyl Corporation; product name: ZEST PQLTX; produced by emulsion polymerization; average degree of polymerization: 800; average particle diameter: 1.8 µm) as a dusting agent were added and mixed into 100 parts of the finely ground product using a cooler mixer with an addition temperature (temperature of finely ground product) of 90°C to thereby produce a powder composition B containing vinyl chloride resin fine particles B.

The drop time and bulk density of the powder composition B were measured. The results are shown in Table 2.

### (Production Example 5: Production of powder composition C)

A powder composition C was produced and various measurements were performed in the same way as in Production Example 3 with the exception that in Production Example 3, the amount of the vinyl chloride resin fine particles B (produced by Shin Dai-ichi Vinyl Corporation; product name: ZEST PQLTX) compounded as a dusting agent was changed from 5 parts to 10 parts. The results are shown in Table 2.

### (Production Example 6: Production of powder composition D)

A powder composition D was produced and various measurements were performed in the same way as in Production Example 3 with the exception that in Production Example 3, the amount of the vinyl chloride resin fine particles B (produced by Shin Dai-ichi Vinyl Corporation; product name: ZEST PQLTX) compounded as a dusting agent was changed from 5 parts to 15 parts. The results are shown in Table 2.

### (Production Example 7: Production of powder composition E)

A powder composition E was produced and various measurements were performed in the same way as in Production Example 3 with the exception that in Production Example 3, the amount of the vinyl chloride resin fine particles B (produced by Shin Dai-ichi Vinyl Corporation; product name: ZEST PQLTX) compounded as a dusting agent was changed from 5 parts to 30 parts. The results are shown in Table 2.

### (Production Example 8: Production of powder composition F)

A powder composition F was produced and various measurements were performed in the same way as in Production Example 3 with the exception that in Production Example 3, the raw material vinyl chloride resin composition B produced in Production Example 2 was used instead of the raw material vinyl chloride resin composition A produced in Production Example 1, and the amount of the vinyl chloride resin fine particles B (produced by Shin Dai-ichi Vinyl Corporation; product name: ZEST PQLTX) compounded as a dusting agent was changed from 5 parts to 10 parts. The results are shown in Table 2.

### (Production Example 9: Production of powder composition G)

A powder composition G was produced and various measurements were performed in the same way as in Production Example 3 with the exception that in Production Example 3, the raw material vinyl chloride resin composition B produced in Production Example 2 was used instead of the raw material vinyl chloride resin composition A produced in Production Example 1, and the amount of the vinyl chloride resin fine particles B (produced by Shin Dai-ichi Vinyl Corporation; product name: ZEST PQLTX) compounded as a dusting agent was changed from 5 parts to 15 parts. The results are shown in Table 2.

### (Production Example 10: Production of powder composition H)

A powder composition H was produced and various measurements were performed in the same way as in Production Example 3 with the exception that in Production Example 3, the raw material vinyl chloride resin composition B produced in Production Example 2 was used instead of the raw material vinyl chloride resin composition A produced in Production Example 1, and the amount of the vinyl chloride resin fine particles B (produced by Shin Dai-ichi Vinyl Corporation; product name: ZEST PQLTX) compounded as a dusting agent was changed from 5 parts to 30 parts. The results are shown in Table 2.

### (Example 1)

### <Production of vinyl chloride resin composition>

A vinyl chloride resin composition was produced by adding and mixing 5 parts of the powder composition A produced in Production Example 3 into 95 parts of the raw material vinyl chloride resin composition A produced in Production Example 1 at room temperature using a cooler mixer.

The drop time and bulk density of this vinyl chloride resin composition were measured. The results are shown in Table 3.

### <Formation of vinyl chloride resin molded product>

The obtained vinyl chloride resin composition was sprinkled onto a textured mold that was heated to a temperature of 250°C and, after being left to melt for an arbitrary time, excess vinyl chloride resin composition was shaken off. Thereafter, the textured mold onto which the vinyl chloride resin composition had been sprinkled was placed at rest in an oven set to a temperature of 200°C, and, once 60 seconds had passed after being placed at rest, the textured mold was cooled with cooling water. Once the mold temperature had dropped to 40°C, a vinyl chloride resin molded sheet of 150 mm × 180 mm × 1 mm was removed from the mold as a vinyl chloride resin molded product.

The obtained vinyl chloride resin molded product was used to evaluate tensile elongation and tensile stress at low temperature. The results are shown in Table 3.

### (Example 2)

A vinyl chloride resin composition and a vinyl chloride resin molded product were produced, and various measurements and evaluations were performed in the same way as in Example 1 with the exception that in Example 1, the vinyl chloride resin composition was produced by adding and mixing 5 parts of the powder composition B produced in Production Example 4 into 95 parts of the raw material vinyl chloride resin composition A produced in Production Example 1 at room temperature. The results are shown in Table 3.

### (Example 3)

A vinyl chloride resin composition and a vinyl chloride resin molded product were produced, and various measurements and evaluations were performed in the same way as in Example 1 with the exception that in Example 1, the vinyl chloride resin composition was produced by adding and mixing 5 parts of the powder composition C produced in Production Example 5 into 95 parts of the raw material vinyl chloride resin composition A produced in Production Example 1 at room temperature. The results are shown in Table 3.

### (Example 4)

A vinyl chloride resin composition and a vinyl chloride resin molded product were produced, and various measurements and evaluations were performed in the same way as in Example 1 with the exception that in Example 1, the vinyl chloride resin composition was produced by adding and mixing 10 parts of the powder composition C produced in Production Example 5 into 90 parts of the raw material vinyl chloride resin composition A produced in Production Example 1 at room temperature. The results are shown in Table 3.

### (Example 5)

A vinyl chloride resin composition and a vinyl chloride resin molded product were produced, and various measurements and evaluations were performed in the same way as in Example 1 with the exception that in Example 1, the vinyl chloride resin composition was produced by adding and mixing 20 parts of the powder composition C produced in Production Example 5 into 80 parts of the raw material vinyl chloride resin composition A produced in Production Example 1 at room temperature. The results are shown in Table 3.

### (Example 6)

A vinyl chloride resin composition and a vinyl chloride resin molded product were produced, and various measurements and evaluations were performed in the same way as in Example 1 with the exception that in Example 1, the vinyl chloride resin composition was produced by adding and mixing 5 parts of the powder composition D produced in Production Example 6 into 95 parts of the raw material vinyl chloride resin composition A produced in Production Example 1 at room temperature. The results are shown in Table 3.

### (Example 7)

A vinyl chloride resin composition and a vinyl chloride resin molded product were produced, and various measurements and evaluations were performed in the same way as in Example 1 with the exception that in Example 1, the vinyl chloride resin composition was produced by adding and mixing 10 parts of the powder composition D produced in Production Example 6 into 90 parts of the raw material vinyl chloride resin composition A produced in Production Example 1 at room temperature. The results are shown in Table 3.

### (Example 8)

A vinyl chloride resin composition and a vinyl chloride resin molded product were produced, and various measurements and evaluations were performed in the same way as in Example 1 with the exception that in Example 1, the vinyl chloride resin composition was produced by adding and mixing 20 parts of the powder composition D produced in Production Example 6 into 80 parts of the raw material vinyl chloride resin composition A produced in Production Example 1 at room temperature. The results are shown in Table 3.

### (Example 9)

A vinyl chloride resin composition and a vinyl chloride resin molded product were produced, and various measurements and evaluations were performed in the same way as in Example 1 with the exception that in Example 1, the vinyl chloride resin composition was produced by adding and mixing 5 parts of the powder composition E produced in Production Example 7 into 95 parts of the raw material vinyl chloride resin composition A produced in Production Example 1 at room temperature. The results are shown in Table 3.

### (Example 10)

A vinyl chloride resin composition and a vinyl chloride resin molded product were produced, and various measurements and evaluations were performed in the same way as in Example 1 with the exception that in Example 1, the vinyl chloride resin composition was produced by adding and mixing 10 parts of the powder composition E produced in Production Example 7 into 90 parts of the raw material vinyl chloride resin composition A produced in Production Example 1 at room temperature. The results are shown in Table 3.

### (Example 11)

A vinyl chloride resin composition and a vinyl chloride resin molded product were produced, and various measurements and evaluations were performed in the same way as in Example 1 with the exception that in Example 1, the vinyl chloride resin composition was produced by adding and mixing 20 parts of the powder composition E produced in Production Example 7 into 80 parts of the raw material vinyl chloride resin composition A produced in Production Example 1 at room temperature. The results are shown in Table 3.

### (Example 12)

A vinyl chloride resin composition and a vinyl chloride resin molded product were produced, and various measurements and evaluations were performed in the same way as in Example 1 with the exception that in Example 1, the vinyl chloride resin composition was produced using 95 parts of the raw material vinyl chloride resin composition B produced in Production Example 2 and 5 parts of the powder composition F produced in Production Example 8 instead of 95 parts of the raw material vinyl chloride resin composition A produced in Production Example 1 and the powder composition A produced in Production Example 3. The results are shown in Table 4.

### (Example 13)

A vinyl chloride resin composition and a vinyl chloride resin molded product were produced, and various measurements and evaluations were performed in the same way as in Example 12 with the exception that in Example 12, the amount of the raw material vinyl chloride resin composition B produced in Production Example 2 was changed to 90 parts and the amount of the powder composition F produced in Production Example 8 was changed to 10 parts when producing the vinyl chloride resin composition. The results are shown in Table 4.

### (Example 14)

A vinyl chloride resin composition and a vinyl chloride resin molded product were produced, and various measurements and evaluations were performed in the same way as in Example 12 with the exception that in Example 12, the amount of the raw material vinyl chloride resin composition B produced in Production Example 2 was changed to 80 parts and the amount of the powder composition F produced in Production Example 8 was changed to 20 parts when producing the vinyl chloride resin composition. The results are shown in Table 4.

### (Example 15)

A vinyl chloride resin composition and a vinyl chloride resin molded product were produced, and various measurements and evaluations were performed in the same way as in Example 1 with the exception that in Example 1, the vinyl chloride resin composition was produced using 95 parts of the raw material vinyl chloride resin composition B produced in Production Example 2 and 5 parts of the powder composition G produced in Production Example 9 instead of 95 parts of the raw material vinyl chloride resin composition A produced in Production Example 1 and the powder composition A produced in Production Example 3. The results are shown in Table 4.

### (Example 16)

A vinyl chloride resin composition and a vinyl chloride resin molded product were produced, and various measurements and evaluations were performed in the same way as in Example 15 with the exception that in Example 15, the amount of the raw material vinyl chloride resin composition B produced in Production Example 2 was changed to 90 parts and the amount of the powder composition G produced in Production Example 9 was changed to 10 parts when producing the vinyl chloride resin composition. The results are shown in Table 4.

### (Example 17)

A vinyl chloride resin composition and a vinyl chloride resin molded product were produced, and various measurements and evaluations were performed in the same way as in Example 15 with the exception that in Example 15, the amount of the raw material vinyl chloride resin composition B produced in Production Example 2 was changed to 80 parts and the amount of the powder composition G produced in Production Example 9 was changed to 20 parts when producing the vinyl chloride resin composition. The results are shown in Table 4.

### (Example 18)

A vinyl chloride resin composition and a vinyl chloride resin molded product were produced, and various measurements and evaluations were performed in the same way as in Example 1 with the exception that in Example 1, the vinyl chloride resin composition was produced using 95 parts of the raw material vinyl chloride resin composition B produced in Production Example 2 and 5 parts of the powder composition H produced in Production Example 10 instead of 95 parts of the raw material vinyl chloride resin composition A produced in Production Example 1 and the powder composition A produced in Production Example 3. The results are shown in Table 4.

### (Example 19)

A vinyl chloride resin composition and a vinyl chloride resin molded product were produced, and various measurements and evaluations were performed in the same way as in Example 18 with the exception that in Example 18, the amount of the raw material vinyl chloride resin composition B produced in Production Example 2 was changed to 90 parts and the amount of the powder composition H produced in Production Example 10 was changed to 10 parts when producing the vinyl chloride resin composition. The results are shown in Table 4.

### (Example 20)

A vinyl chloride resin composition and a vinyl chloride resin molded product were produced, and various measurements and evaluations were performed in the same way as in Example 18 with the exception that in Example 18, the amount of the raw material vinyl chloride resin composition B produced in Production Example 2 was changed to 80 parts and the amount of the powder composition H produced in Production Example 10 was changed to 20 parts when producing the vinyl chloride resin composition. The results are shown in Table 4.

### (Comparative Example 1)

A vinyl chloride resin molded product was produced, and various measurements and evaluations were performed in the same way as in Example 1 with the exception that in Example 1, the raw material vinyl chloride resin composition (virgin material) A produced in Production Example 1 was used as a vinyl chloride resin composition in that form without compounding a powder composition. The results are shown in Table 3. The bulk density and drop time of the raw material vinyl chloride resin composition A are also shown in Table 3.

### (Comparative Example 2)

A vinyl chloride resin molded product was produced, and various measurements and evaluations were performed in the same way as in Example 1 with the exception that in Example 1, the raw material vinyl chloride resin composition (virgin material) B produced in Production Example 2 was used as a vinyl chloride resin composition in that form without compounding a powder composition. The results are shown in Table 4. The bulk density and drop time of the raw material vinyl chloride resin composition B are also shown in Table 4.

**[Table 1]**

| | | | Production Example 1 | Production Example 2 |
|---|---|---|---|---|
| | (a) Vinyl chloride resin particles ¹⁾ [parts by mass] | | 100 | 100 |
| | (b) Vinyl chloride resin fine particles²⁾ [parts by mass] | | 20 | 20 |
| | (c) Plasticizer | Trimellitic acid ester³⁾ [parts by mass] | 110 | - |
| | | Adipic acid polyester⁴⁾ [parts by mass] | - | 110 |
| | | Other plasticizer (epoxidized soybean oil⁵⁾) [parts by mass] | 5 | 5 |
| Formulation of raw material vinyl chloride resin composition (virgin material) | Heat stabilizer | Perchloric acid-substituted hydrotalcite⁶⁾ [parts by mass] | 4.6 | 4.6 |
| | | Na-Zeolite⁷⁾ [parts by mass] | 2.4 | 2.4 |
| | | Stearoyl benzoyl methane⁸⁾ [parts by mass] | 0.5 | 0.5 |
| | | Zinc stearate⁹⁾ [parts by mass] | 0.2 | 0.2 |
| | Light stabilizer | Hindered amine light stabilizer¹⁰⁾ [parts by mass] | 0.2 | 0.2 |
| | Mold release agent | 12-Hydroxystearic acid¹¹⁾ [parts by mass] | 0.4 | 0.4 |
| | Pigment | Carbon black¹²⁾ [parts by mass] | 3.8 | 3.8 |

**[Table 2]**

| | | Production Example 3 | Production Example 4 | Production Example 5 | Production Example 6 | Production Example 7 | Production Example 8 | Production Example 9 | Production Example 10 |
|---|---|---|---|---|---|---|---|---|---|
| Formulation of (d) powder composition | Powder of surface skin material made of vinyl chloride resin obtained using raw material vinyl chloride resin composition of Production Example 1 [parts by mass] | 100 | 100 | 100 | 100 | 100 | - | - | - |
| | Powder of surface skin material made of vinyl chloride resin obtained using raw material vinyl chloride resin composition of Production Example 2 [parts by mass] | - | - | - | - | - | 100 | 100 | 100 |
| | (b-1) Vinyl chloride resin fine particles B¹³⁾ [parts by mass] | - | 5 | 10 | 15 | 30 | 10 | 15 | 30 |
| Volume-average particle diameter of powder of surface skin material made of vinyl chloride resin (µm) | | 110 | 110 | 110 | 110 | 110 | 110 | 110 | 110 |
| Proportion of (b-1) vinyl chloride resin fine particles B in (d) powder composition (mass%) | | 0.0 | 4.8 | 9.1 | 13.0 | 23.1 | 9.1 | 13.0 | 23.1 |
| Evaluation of (d) powder composition | Drop time (s) | Does not flow | 32.3 | 25.8 | 18.2 | 16.1 | 28.0 | 22.8 | 19.7 |
| | Bulk density (g/cm³) | - | *0.44* | 0.46 | 0.47 | 0.49 | *0.48* | 0.52 | *0.54* |

**[Table 3]**

| | | | Example 1 | Example 2 | Example 3 | Example 4 | Example 5 | Example 6 | Example 7 | Example 8 | Example 9 | Example 10 | Example 11 | Comparative Example 1 |
|---|---|---|---|---|---|---|---|---|---|---|---|---|---|---|
| Formulation of vinyl chloride resin composition | Virgin material [parts by mass] | Production Example 1 | 95 | 95 | 95 | 90 | 80 | 95 | 90 | 80 | 95 | 90 | 80 | 100 |
| | | Production Example 2 | - | - | - | - | - | - | - | - | - | - | - | - |
| | (d) Powder composition [parts by mass] | Production Example 3 | 5 | | | | | | | | | | | |
| | | Production Example 4 | - | 5 | - | - | - | - | - | - | - | - | - | - |
| | | Production Example 5 | - | - | 5 | 10 | 20 | - | - | - | - | - | - | - |
| | | Production Example 6 | - | - | - | - | - | 5 | 10 | 20 | - | - | - | - |
| | | Production Example 7 | - | - | - | - | - | - | - | - | 5 | 10 | 20 | - |
| Proportion of all vinyl chloride resin fine particles in vinyl chloride resin composition (mass%) | | | 7.7 | 7.9 | 8.1 | 8.2 | 8.3 | 8.3 | 8.6 | 9.1 | 8.8 | 9.6 | 11.1 | 8.1 |
| Proportion of powder of surface skin material made of vinyl chloride resin per 100 parts by mass of vinylchloride resin composition (parts by mass) | | | 5 | 4.8 | 4.5 | 9.1 | 18.2 | 4.3 | 8.7 | 17.4 | 3.8 | 7.7 | 15.4 | 0.0 |
| Proportion of all vinyl chloride resin fine particles per 100 parts by mass of powder of surface skin material made of vinyl chloride resin (parts by mass) | | | 3.8 | 4.0 | 4.3 | 2.1 | 1.0 | 4.6 | 2.2 | 1.1 | 5.3 | 2.6 | 1.3 | 0.0 |
| Proportion ofall vinyl chloride resin fine particles per 100 parts by mass, in total, of (a) vinyl chloride resin particles and powder of surface skin material made of vinyl chloride resin (parts by mass) | | | 19.0 | 19.2 | 19.5 | 18.9 | 17.8 | 19.7 | 19.3 | 18.6 | 20.2 | 20.3 | 20.6 | 200 |
| Evaluation of vinyl chloride resin composition | Drop tine (s) | | 20.2 | 18.4 | 18.0 | 18.2 | 18.5 | 18.3 | 18.0 | 17.8 | 18.2 | 18.0 | 17.5 | 18.5 |
| | Buk density (g/cm³) | | 0.57 | 0.57 | 0.58 | 0.57 | 0.52 | 0.57 | 0.56 | 0.53 | 0.58 | 0.57 | 0.53 | 0.58 |
| Evaluation of vinyl chloride resin molded product | Tensile elongation (%) | | 220 | 210 | 210 | 210 | 210 | 210 | 210 | 190 | 210 | 190 | 170 | 210 |
| | Tensile stress (MPa) | | *20.5* | *20.5* | 20.0 | *20.5* | 20.0 | *20.5* | *20.5* | 19.0 | *20.0* | 18.5 | 170 | *20.0* |

**[Table 4]**

| | | | Example 12 | Example 13 | Example 14 | Example 15 | Example 16 | Example 17 | Example 18 | Example 19 | Example 20 | Comparative Example 2 |
|---|---|---|---|---|---|---|---|---|---|---|---|---|
| Formulation of vinyl chloride resin composition | Virgin material [parts by mass] | Production Example 1 | - | - | - | - | - | - | - | - | - | - |
| | | Production Example 2 | 95 | 90 | 80 | 95 | 90 | 80 | 95 | 90 | 80 | 100 |
| | (d) Powder composition [parts by mass] | Production Example 8 | 5 | 10 | 20 | - | - | - | - | - | - | - |
| | | Production Example 9 | - | - | - | 5 | 10 | 20 | - | - | - | - |
| | | Production Exanple 10 | - | - | - | | | | 5 | 10 | 20 | - |
| Proportion of all vinyl chloride resin fine particles in vinyl chloride resin composition (mass%) | | | 8.1 | 8.2 | 8.3 | 8.3 | 8.6 | 9.1 | 8.8 | 9.6 | 11.1 | 8.1 |
| Proportion of powder of surface skin material made of vinyl chloride resin per 100 parts by mass of vinyl chloride resin composition (parts by mass) | | | 4.5 | 8.7 | 15.4 | 4.3 | 8.7 | 17.4 | 3.8 | 7.7 | 15.4 | 0.0 |
| Proportion of all vinyl chloride resin fine particles per 100 parts by mass of powder of surface skin material made of vinyl chloride resin (parts by mass) | | | 4.3 | 1.9 | 1.2 | 4.6 | 2.2 | 1.1 | 5.3 | 2.6 | 1.3 | 0.0 |
| Proportion of all vinyl chloride resin fine particles per 100 parts by mass, in total, of (a) vinyl chloride resin particles and powder of surface skin material made of vinyl chloride resin (parts by mass) | | | 19.5 | 16.9 | 17.8 | 19.7 | 19.3 | 18.6 | 20.2 | 20.3 | 20.6 | 20.0 |
| Evaluation of vinyl chloride resin composition | Drop time (s) | | 19.4 | 19.4 | 19.5 | 19.2 | 18.6 | 18.6 | 19.3 | 18.0 | 17.5 | 19.5 |
| | Bulk density (g/cm³) | | 0.60 | 0.58 | 0.56 | 0.61 | 0.57 | 0.56 | 0.62 | 0.58 | 0.55 | 0.62 |
| Evaluation of vinyl chloride resin molded product | Tensile elongation (%) | | 150 | 150 | 160 | 150 | 150 | 150 | 150 | 140 | 130 | 150 |
| | Tensile stress (MPa) | | 21.0 | 21.5 | 22.5 | 21.0 | 21.5 | 21.5 | 21.0 | 20.5 | 19.5 | 21.5 |

| | | | | | | | | | | | | |
|---|---|---|---|---|---|---|---|---|---|---|---|---|
| 1) Product name: ZEST^{®} (ZEST is a registered trademark in Japan, other countries, or both) 1700ZI (produced by suspension polymerization; average degree of polymerization: 1,700; average particle diameter: 130 µm); produced by Shin Dai-ichi Vinyl Corporation 2) Product name: ZEST PQLTX (produced by emulsion polymerization; average degree of polymerization: 800; average particle diameter: 1.8 µm); produced by Shin Dai-ichi Vinyl Corporation 3) Product name: TRIMEX N-08; produced by Kao Corporation 4) Product name: HPN-3130; produced by Adeka Corporation 5) Product name: ADK CIZER O-130S; produced by Adeka Corporation 6) Product name: ALCAMIZER^{®} 5 (ALCAMIZER is a registered trademark in Japan, other countries, or both); produced by Kyowa Chemical Industry Co., Ltd. 7) Product name: MIZUKALIZER DS; produced by Mizusawa Industrial Chemicals, Ltd. 8) Product name: Karenz DK-1; produced by Showa Denko K.K. 9) Product name: SAKAI SZ2000; produced by Sakai Chemical Industry Co., Ltd. 10) Product name: LA-72; produced by Adeka Corporation 11) Product name: ADK STAB LS-12; produced by Adeka Corporation 12) Product name: DA P 4720 Black; produced by Dainichiseika Color and Chemicals Mfg. Co., Ltd. 13) Product name: ZEST PQLTX (produced by emulsion polymerization; average degree of polymerization: 800; average particle diameter: 1.8 µm); produced by Shin Dai-ichi Vinyl Corporation | | | | | | | | | | | | |

It can be seen from the results in Table 3 and Table 4 that despite the vinyl chloride resin compositions of Examples 1 to 19, which each contain vinyl chloride resin fine particles, also containing a powder of surface skin material made of vinyl chloride resin, these vinyl chloride resin compositions have a drop time that is similar to or shorter than that of the raw material vinyl chloride resin compositions of Comparative Examples 1 and 2, which do not contain a powder of surface skin material made of vinyl chloride resin, and can inhibit reduction of powder fluidity.

### INDUSTRIAL APPLICABILITY

According to the present disclosure, it is possible to provide a vinyl chloride resin composition that can inhibit reduction of powder fluidity even when containing a finely ground product of surface skin material made of vinyl chloride resin and a method of producing this vinyl chloride resin composition.

Moreover, according to the present disclosure, it is possible to provide a vinyl chloride resin molded product obtained through molding of this vinyl chloride resin composition.

Furthermore, according to the present disclosure, it is possible to provide a laminate including this vinyl chloride resin molded product.

## Claims

1. A vinyl chloride resin composition comprising: (a) vinyl chloride resin particles; (b) vinyl chloride resin fine particles A; (c) a plasticizer; and (d) a powder composition containing a powder of surface skin material made of vinyl chloride resin.

2. The vinyl chloride resin composition according to claim 1, wherein an amount of the powder of surface skin material made of vinyl chloride resin is not less than 1 part by mass and not more than 40 parts by mass per 100 parts by mass of the vinyl chloride resin composition.

3. The vinyl chloride resin composition according to claim 1, wherein the powder of surface skin material made of vinyl chloride resin has a volume-average particle diameter of not less than 50 µm and not more than 500 µm.

4. The vinyl chloride resin composition according to claim 1, wherein the powder composition further contains (b-1) vinyl chloride resin fine particles B.

5. The vinyl chloride resin composition according to claim 1, wherein an amount of all vinyl chloride resin fine particles is not less than 3 parts by mass and not more than 40 parts by mass per 100 parts by mass of the powder of surface skin material made of vinyl chloride resin.

6. The vinyl chloride resin composition according to claim 1, wherein an amount of all vinyl chloride resin fine particles is not less than 15 parts by mass and not more than 35 parts by mass per 100 parts by mass, in total, of the (a) vinyl chloride resin particles and the powder of surface skin material made of vinyl chloride resin.

7. The vinyl chloride resin composition according to claim 4, wherein proportional content of the (b-1) vinyl chloride resin fine particles B in the powder composition is not less than 2.0 mass% and not more than 25 mass%.

8. The vinyl chloride resin composition according to claim 4, wherein the powder composition has a drop time of 35 seconds or less.

9. The vinyl chloride resin composition according to claim 1, wherein the powder composition is contained in a proportion of not less than 3 parts by mass and not more than 30 parts by mass per 100 parts by mass of the (a) vinyl chloride resin particles.

10. The vinyl chloride resin composition according to claim 1, wherein the (c) plasticizer includes either or both of a trimellitic acid ester and a polyester.

11. The vinyl chloride resin composition according to claim 1, used in powder molding.

12. The vinyl chloride resin composition according to claim 1, used in powder slush molding.

13. A method of producing a vinyl chloride resin composition comprising:
preparing a raw material vinyl chloride resin composition containing (a) vinyl chloride resin particles, (b) vinyl chloride resin fine particles A, and (c) a plasticizer;
preparing a powder composition containing a powder of surface skin material made of vinyl chloride resin; and
adding and mixing the powder composition into the raw material vinyl chloride resin composition.

14. The method of producing a vinyl chloride resin composition according to claim 13, wherein the preparing a powder composition containing a powder of surface skin material made of vinyl chloride resin includes adding and mixing (b-1) vinyl chloride resin fine particles B into the powder of surface skin material made of vinyl chloride resin.

15. A vinyl chloride resin molded product obtained through molding of the vinyl chloride resin composition according to any one of claims 1 to 12.

16. The vinyl chloride resin molded product according to claim 15, for an automobile instrument panel surface skin.

17. A laminate comprising: a foamed polyurethane molded product; and the vinyl chloride resin molded product according to claim 15.

18. The laminate according to claim 17, for an automobile instrument panel.
